# EUROPÄISCHE PATENTSCHRIFT

(11) **EP 4 177 134 B1**
(45) Veröffentlichungstag und Bekanntmachung des Hinweises auf die Patenterteilung: **16.07.2025**
(21) Anmeldenummer: 22205447.0
(22) Anmeldetag: 04.11.2022
(51) Int. Cl.: B62D 5/04

(54) **ELEKTROMECHANISCHES LENKSYSTEM UND VERFAHREN ZUM BETREIBEN EINES ELEKTROMECHANISCHEN LENKSYSTEMS MIT PLAUSIBILITÄTSPRÜFUNG VON WINKELSENSORWERTEN**
ELECTROMECHANICAL STEERING SYSTEM AND METHOD FOR OPERATING AN ELECTROMECHANICAL STEERING SYSTEM WITH PLAUSIBILITY CHECK OF ANGLE SENSOR VALUES
SYSTÈME DE DIRECTION ÉLECTROMÉCANIQUE ET PROCÉDÉ DE FONCTIONNEMENT D'UN SYSTÈME DE DIRECTION ÉLECTROMÉCANIQUE AVEC VÉRIFICATION DE PLAUSIBILITÉ DE VALEURS DE CAPTEUR D'ANGLE

(30) Priorität: 09.11.2021 DE 102021212608
(43) Veröffentlichungstag der Anmeldung: 10.05.2023
(73) Patentinhaber: thyssenkrupp Presta AG, 9492 Eschen (LI); thyssenkrupp AG, 45143 Essen (DE)
(72) Erfinder: Forte, Sebastian, 9493 Mauren (LI); Sen, Sedat, 9435 Heerbrugg (CH); Galehr, Robert, 9486 Schaanwald (LI)
(74) Vertreter: thyssenkrupp Intellectual Property GmbH

(56) Entgegenhaltungen:
- WO-A1-2018/233846
- WO-A1-2020/164773
- DE-A1- 102008 021 849
- US-A1- 2017 138 760
- US-B1- 6 354 396

## Beschreibung

Die Erfindung betrifft ein elektromechanisches Lenksystem für ein Kraftfahrzeug mit einer Lenkwelle, einer Steuereinheit und einem Feedback-Aktuator, der einen Elektromotor mit einer Motorwelle aufweist und ausgebildet ist, über ein Getriebe ein Drehmoment auf die Lenkwelle aufzubringen. Des Weiteren betrifft die Erfindung ein Verfahren zum Betreiben eines elektromechanischen Lenksystems, wobei zu einem Zeitpunkt mit einem ersten Winkelsensor ein Drehwinkel der Lenkwelle als erster Sensorwert erfasst wird und mit einem zweiten Winkelsensor ein Drehwinkel der Motorwelle als zweiter Sensorwert erfasst wird.

Aus der WO 2018/233846 A1 ist ein Steer-by-Wire-Lenksystem mit einem Feedback-Aktuator bekannt, der über ein Getriebe ein Drehmoment auf die Lenkwelle aufbringen kann. Dabei wird ein der Motorwelle des Feedback-Aktuators zugeordneter Winkelsensor und ein der Lenkwelle zugeordneter Winkelsensor genutzt, um einen über 360° hinausgehenden Drehwinkel der Lenkwelle zu bestimmen.

Die DE 10 2008 021 849 A1 offenbart ein elektromechanisches Lenksystem für Fahrzeuge, wobei ein von einem Fahrer vorgegebener Handwinkel erfasst wird. Darüber hinaus umfasst das Lenksystem eine Motor-Positionssensorik, die einem auf die Zahnstange wirkenden Servomotor zugeordnet ist, wobei die Zahnstange mit den lenkbaren Rädern des Fahrzeugs gekoppelt ist. Mittels einer Abgleicheinrichtung wird dabei eine Abweichung zwischen einem Handwinkel und einem Radlenkwinkel der gelenkten Räder erkannt, und den Radlenkwinkel an den sich aus einem Fahrerwunsch ergebenden Handwinkel anpasst.

Des Weiteren ist aus der WO 2020/164773 A1 ein Verfahren zur Überwachung einer Lenkvorrichtung bekannt. Dabei ist vorgesehen, dass die Lenkvorrichtung zwei Lenkaktuatoren umfasst, die beide über ein Lenkgetriebe einen Lenkwinkel für lenkbare Räder einstellen können. Durch Lagesensoreinheiten, die einem jeweiligen Lenkungsaktuator zugeordnet sind, soll dabei ein Abgleich erfolgen und beispielsweise auf einen Zahnsprung bei einem Zahnriemen zwischen Lenkaktuator und Lenkgetriebe erkannt werden.

Ein elektromechanisches Lenksystem mit einem Feedback-Aktuator, wobei sowohl an dem Feedback-Aktuator als auch an der Lenkwelle ein Drehwinkel mit entsprechenden Sensoren erfasst wird, ist auch aus der US 6,354,396 B1 bekannt.

Ein weiteres Verfahren zur Bestimmung eines über eine 360°-Drehung hinausgehenden Absolutwinkel bei einem Lenksystem ist aus der US 2017/0138760 A1 bekannt.

Nachteilig dabei ist, dass Probleme des Lenkgetriebes auftreten können, die dazu führen können, dass ein Lenkwinkel der Lenkwelle falsch bestimmt wird.

Vor diesem Hintergrund ist es eine Aufgabe der vorliegenden Erfindung, ein verbessertes elektromechanisches Lenksystem und ein verbessertes Verfahren zum Betreiben eines elektromechanischen Lenksystems bereitzustellen, wobei insbesondere eine Drehwinkelbestimmung mit höherer Zuverlässigkeit erfolgt und Probleme bei der Drehwinkelbestimmung erkannt werden können.

Zur Lösung dieser Aufgabe werden ein Verfahren zum Betreiben eines elektromechanischen Lenksystems für ein Kraftfahrzeug sowie ein elektromechanischen Lenksystemgemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines elektromechanischen Lenksystems, insbesondere eines Steer-by-Wire-Lenksystems, für ein Kraftfahrzeug vor, umfassend eine Lenkwelle, eine Steuereinheit und einen Feedback-Aktuator, der einen Elektromotor mit einer Motorwelle aufweist und ausgebildet ist, über ein Getriebe mit einer Getriebeübersetzung ein Drehmoment auf die Lenkwelle aufzubringen, wobei zu einem Zeitpunkt mit einem ersten Winkelsensor ein Drehwinkel der Lenkwelle als erster Sensorwert erfasst wird und mit einem zweiten Winkelsensor ein Drehwinkel der Motorwelle als zweiter Sensorwert erfasst wird, wobei die Steuereinheit basierend auf einem in der Steuereinheit hinterlegten Modell, das zumindest die Getriebeübersetzung als Parameter des Getriebes berücksichtigt, prüft, ob der erfasste erste Sensorwert und der erfasste zweite Sensorwert ein plausibles Wertepaar bilden. Die Getriebeübersetzung ist insbesondere als Verhältnis der Drehzahl des Elektromotors des Feedback-Aktuators beziehungsweise der Motorwelle zu der Drehzahl der Lenkwelle vorgesehen, und ist vorteilhafterweise dem Wert i_g = W±(1/M_min) angenähert, wobei W und M_min jeweils eine ganze natürliche Zahl sind und M_min ≥ 2 ist. Insbesondere ist vorgesehen, dass W = 3 oder W = 5 ist. Vorteilhafterweise ist dabei M_min = 3, sodass sich für die Getriebeübersetzung i_g = 16/3 ergibt, die sich beispielsweise durch ein abtriebseitiges Zahnrad mit einer Zähnezahl Z1 von Z1 = 64 und einer antriebsseitigen Zähnezahl Z2 von Z2 = 12 realisieren lässt.

Vorteilhafterweise werden der erste erfasste Sensorwerte und der zweite erfasste Sensorwert insbesondere unter Anwendung des in der Steuereinheit hinterlegten Modells, dass vorteilhafterweise das Getriebe, insbesondere unter Berücksichtigung der Getriebeübersetzung, simuliert, zueinander in Beziehung gesetzt, wobei insbesondere eine rechentechnische Verarbeitung des erfassten ersten Sensorwerts und des erfassten zweiten Sensorwerts erfolgt.

Insbesondere ist vorgesehen, dass die Steuereinheit auf eine fehlerhafte Funktion des Getriebes erkennt, wenn der erfasste erste Sensorwert und der erfasste zweite Sensorwert kein plausibles Wertepaar bilden. Vorteilhafterweise erfolgt die Überwachung des Getriebes des Feedback-Aktuators durch eine Überprüfung der gleichzeitigen Werte beider Winkelsensoren. Weichen die erfassten Sensorwerte zu stark von einer jeweiligen erlaubten Zone ab, die vorteilhafterweise in dem Modell definiert ist, so gibt es ein Problem im beziehungsweise mit dem Getriebe.

Vorteilhafterweise wird in dem Fall ein Warnhinweis erzeugt, der insbesondere über einen Lautsprecher eines Kraftfahrzeugs oder eine Anzeigeeinrichtung eines Kraftfahrzeugs ausgegeben werden kann.

Gemäß einer besonders vorteilhaften Ausgestaltung der Erfindung umfasst das Getriebe einen Zahnriemen, über den die Motorwelle mit der Lenkwelle verbunden ist, wobei die Steuereinheit basierend auf dem hinterlegten Modell weiter eine Zahnübersprungskontrolle durchführt. Mit dem Verfahren kann also erkannt werden, ob der Zahnriemen "durchrutscht" und insofern eine Drehung der Motorwelle nicht vollständig auf die Lenkwelle übertragen wurde. Insbesondere ist vorgesehen, dass dabei sogar die Anzahl der Zähne, die übersprungen wurden, erkannt werden.

Weiter vorteilhaft ist vorgesehen, dass das hinterlegte Modell wenigstens einen der nachfolgenden Parameter als weiteren Parameter berücksichtigt: Getriebeübersetzung; Getriebesteifigkeit; Getriebespiel; Getriebetemperatur; Getriebeträgheit; Zähnezahl eines antriebsseitigen Zahnrads des Getriebes, Zähnezahl eines abtriebseitigen Zahnrads des Getriebes. Da das Getriebe des Feedback-Aktuators und damit die Getriebeübersetzung nicht perfekt sein können, wird die mit dem Verfahren erfolgende Getriebe-Überwachung vorteilhafterweise durch eine in dem Modell hinterlegte, rechenbasierte Kompensation von Getriebesteifigkeit, Getriebespiel, Getriebetemperatur und/oder Getriebeträgheit deutlich verbessert.

Eine weitere vorteilhafte Ausführungsform des Verfahrens sieht vor, dass der erfasste erste Sensorwert und der erfasste zweite Sensorwert ein plausibles Wertepaar bilden, wenn sich entsprechend dem hinterlegten Modell ein ganzzahliges Vielfaches des zweiten Sensorwertes in den ersten Sensorwert derart überführen lässt, dass ein vorgegebener Abweichungsgrenzwert unterschritten wird. Ein ganzzahliges Vielfaches kann dabei insbesondere auch "1" sein. Durch den Abweichungsgrenzwert wird insbesondere berücksichtigt, dass das Getriebe nicht ideal sein kann und es insofern Abweichungen von der ideal angenommenen Getriebeübersetzung geben kann. Über die Wahl des Abweichungsgrenzwerts kann vorteilhafterweise die Robustheit des Verfahrens beeinflusst werden. Vorteilhafterweise ist der Abweichungsgrenzwert von wenigstens einem Parameter des in der Steuereinheit hinterlegten Modells abhängig.

Gemäß einer weiteren vorteilhaften Ausgestaltung des Verfahrens, bei dem das Getriebe einen Zahnriemen umfasst, über den die Motorwelle mit der Lenkwelle verbunden ist, ist eine Vielzahl von definierten Abweichungsgrenzwerten, insbesondere von definierten weiteren Abweichungsgrenzwerten, hinterlegt, die jeweils einer konkreten Anzahl von Zahnübersprüngen zugeordnet sind. Die Abweichungsgrenzwerte können dabei insbesondere auch durch Zahlenintervalle gebildet sein. Ein Abweichungsgrenzwert muss insofern insbesondere nicht mathematisch exakt getroffen werden. Wenn der erfasste erste Sensorwert und der erfasste zweite Sensorwert kein plausibles Wertepaar bilden, prüft die Steuereinheit vorteilhafterweise weiter, ob einer der hinterlegten Abweichungsgrenzwerte erreicht wurde. Ist dies der Fall, so wird vorteilhafterweise auf einen Zahnübersprung erkannt. Vorteilhafterweise erkennt die Steuereinheit dabei auf eine dem Abweichungsgrenzwert zugeordnete Anzahl von erfolgten Zahnsprüngen, wenn einer der hinterlegten weiteren Abweichungsgrenzwerte erreicht wurde. Es wird also vorteilhafterweise nicht nur die Information gewonnen, dass ein Zahnübersprung erfolgt ist, sondern vorteilhafterweise auch wie viele Zähne übersprungen wurden.

Weiter vorteilhaft prüft die Steuereinheit, ob für die Dauer einer definierten Zeitspanne einer der hinterlegten Abweichungsgrenzwerte erreicht wird, insbesondere stabil erreicht wird. Vorteilhafterweise lässt sich auf diese Weise ein Problem mit dem Getriebe weiter verbessert erkennen.

Insbesondere ist weiter vorgesehen, dass die Richtung des Zahnübersprungs bestimmt wird, vorteilhafterweise in dem die Abweichungsgrenzwerte entsprechend vorzeichenbehaftet festgelegt werden. Das Vorzeichen des ermittelten Abweichungsgrenzwertes wird dabei vorteilhafterweise von der Steuereinheit bei der Prüfung berücksichtigt.

Weiter vorteilhaft bestimmt die Steuereinheit, insbesondere basierend auf dem in der Steuereinheit hinterlegten Modell, einen Absolutwinkel, den die Lenkwelle einnimmt, wobei der Absolutwinkel insbesondere größer als 360° sein kann. Insbesondere wird hierzu auch auf die Druckschrift WO 2018/233846 A1 referenziert.

Eine weitere vorteilhafte Ausführungsform des Verfahrens sieht vor, dass die Steuereinheit unter Verwendung zumindest einer der ermittelten Informationen bezüglich einer erkannten Zahnübersprungskontrolle, insbesondere einer konkret bestimmten Anzahl von Zahnübersprüngen und/oder einer Richtung des Zahnübersprungs, einen Korrekturfaktor bezüglich des erkannten Zahnübersprungs ermittelt. Vorteilhafterweise führt die Steuereinheit durch Anwendung des ermittelten Korrekturfaktors auf den erfassten ersten Sensorwert und/oder den erfassten zweiten Sensorwert eine Fehlerkorrektur durch. Vorteilhafterweise lässt sich der Absolutwinkel, den die Lenkwelle einnimmt, somit auch in vielen Fällen eines Getriebeproblems bestimmen.

Das Ermitteln des Korrekturfaktors umfasst vorteilhafte folgende Schritte: Definieren einer positiven Richtung des Zahnübersprungs und einer negativen Richtung des Zahnübersprungs; Versehen der Anzahl der übersprungenen Zähne mit positivem Vorzeichen, wenn die Richtung des Zahnübersprungs positiv ist; Versehen der Anzahl der übersprungenen Zähne mit negativem Vorzeichen, wenn die Richtung des Zahnübersprungs negativ ist; Multiplizieren der mit dem entsprechenden Vorzeichen versehenen Anzahl der übersprungenen Zähne mit 360°; Dividieren der mit dem entsprechenden Vorzeichen versehenen und mit 360° multiplizierten Anzahl der übersprungenen Zähne durch die Zähnezahl des antriebsseitigen Zahnrads des Getriebes.

Insbesondere werden zur Überwachung der Funktionsfähigkeit des Getriebes des Feedback-Aktuators die folgenden Schritte vorgeschlagen, die auch unabhängig von den zuvor genannten Schritten ausgeführt werden können: Bereitstellen eines definierten Schwellwerts zur Funktionsfähigkeitsüberwachung des Getriebes; gleichzeitiges Erfassen des Drehwinkels der Lenkwelle durch den ersten Winkelsensor und durch den zweiten Winkelsensor; Bilden einer Sensorwertdifferenz zwischen dem Sensorwert des ersten Winkelsensors und dem Sensorwert des zweiten Winkelsensors; Vergleichen der gebildeten Sensorwertdifferenz mit dem definierten Schwellwert; Feststellen einer beeinträchtigten Funktionsfähigkeit des Getriebes, wenn die gebildete Sensorwertdifferenz den definierten Schwellwert übersteigt, und vorteilhafterweise Ausgeben eines Warnsignals.

Vorteilhafterweise umfasst das Bilden einer Sensorwertdifferenz folgenden Schritt: Berücksichtigen von den Zustand und/oder die Eigenschaften des Getriebes beschreibenden Faktoren, wobei die Faktoren vorteilhafterweise die Getriebesteifigkeit, das Getriebespiel, die Getriebetemperatur und/oder die Getriebeträgheit umfassen.

Zur Zahnübersprungskontrolle des Getriebes des Lenksystems sind insbesondere die folgenden Schritte vorgesehen, die insbesondere auch unabhängig von den zuvor genannten Schritten ausgeführt werden können: Bereitstellen eines einen zahnübersprungfreien Zustand des Getriebes repräsentierenden Zusammenhangs zwischen den Sensorwerten des ersten Winkelsensors und den Sensorwerten des zweiten Winkelsensors; gleichzeitiges Erfassen des Lenkwinkels der Lenkwelle durch den ersten Winkelsensor und durch den zweiten Winkelsensor; Bilden eines Wertepaars bestehend aus dem Sensorwert des ersten Winkelsensors und dem Sensorwert des zweiten Winkelsensors; Erfassen eines Zahnübersprungs anhand des gebildeten Wertepaars und des einen zahnübersprungfreien Zustand des Getriebes repräsentierenden Zusammenhangs; Speichern von Informationen betreffend den Zahnübersprung, insbesondere in einer Speichereinheit der Steuereinheit, wenn ein Zahnübersprung erfasst wurde.

Vorteilhafterweise umfasst das Erfassen eines Zahnübersprungs folgende Schritte: Bereitstellen einer definierten Zeitspanne zur Erfassung eines Zahnübersprungs; Ermitteln, ob das gebildete Wertepaar für die Dauer der definierten Zeitspanne außerhalb des einen zahnübersprungfreien Zustand des Getriebes repräsentierenden Zusammenhangs ist.

Die Informationen betreffend den Zahnübersprung umfassen insbesondere die Anzahl der übersprungenen Zähne, die Richtung des Zahnübersprungs, Zeitstempel und/oder die Zähnezahl des antriebsseitigen Zahnrads des Getriebes.

Vorteilhafterweise umfasst das Verfahren folgende weitere Schritte: Berechnen eines Korrekturfaktors mittels der gespeicherten Informationen betreffend den Zahnübersprung; Korrigieren der Sensorwerte durch Anwenden des berechneten Korrekturfaktors auf die Sensorwerte. Dabei ist vorteilhafterweise vorgesehen, dass das Berechnen des Korrekturfaktors folgende Schritte umfasst: Definieren einer positiven Richtung des Zahnübersprungs und einer negativen Richtung des Zahnübersprungs; Versehen der Anzahl der übersprungenen Zähne mit positivem Vorzeichen, wenn die Richtung des Zahnübersprungs positiv ist; Versehen der Anzahl der übersprungenen Zähne mit negativem Vorzeichen, wenn die Richtung des Zahnübersprungs negativ ist; Multiplizieren der mit dem entsprechenden Vorzeichen versehenen Anzahl der übersprungenen Zähne mit 360°; Dividieren der mit dem entsprechenden Vorzeichen versehenen und mit 360° multiplizierten Anzahl der übersprungenen Zähne durch die Zähnezahl des antriebsseitigen Zahnrads des Getriebes.

Das zur Lösung der eingangs genannten Aufgabe ferner vorgeschlagene elektromechanische Lenksystem für ein Kraftfahrzeug, wobei das Lenksystem insbesondere ein Steer-by-Wire-Lenksystem sein kann, umfasst eine Lenkwelle, eine Steuereinheit und einen Feedback-Aktuator, der einen Elektromotor mit einer Motorwelle aufweist und ausgebildet ist, über ein Getriebe, insbesondere ein Zahnriemengetriebe, mit einer vorgegebenen Getriebeübersetzung ein Drehmoment auf die Lenkwelle aufzubringen, wobei ein erster Winkelsensor der Lenkwelle zur Erfassung eines Drehwinkels der Lenkwelle zugeordnet ist und ein zweiter Winkelsensor der Motorwelle zur Erfassung eines Drehwinkels der Motorwelle zugeordnet ist, und wobei die Steuereinheit ausgebildet ist, das Lenksystem nach einem erfindungsgemäß ausgebildeten Verfahren zu betreiben, insbesondere einem Verfahren mit den vorstehend beschriebenen Merkmalen einzeln oder in Kombination. Vorteilhafterweise ist die Steuereinheit dazu ausgebildet ist, anhand eines Sensorwerts des ersten Winkelsensors und eines Sensorwerts des zweiten Winkelsensors eine Funktionsfähigkeitsüberwachung des Getriebes und eine Zahnübersprungskontrolle durchzuführen. Die Steuereinheit ist insbesondere ausgebildet, basierend auf einem in der Steuereinheit hinterlegten Modell des Getriebes eine Plausibilitätsprüfung bezüglich des erfassten ersten Sensorsignals und/oder des erfassten zweiten Sensorsignals durchzuführen, wobei die Steuereinheit vorzugsweise basierend auf einem in der Steuereinheit hinterlegten Modell, das zumindest die Getriebeübersetzung als Parameter des Getriebes berücksichtigt, prüft, ob der erfasste erste Sensorwert und der erfasste zweite Sensorwert ein plausibles Wertepaar bilden. Insbesondere ist bei dem Lenksystem jeweils ein Rotationswinkelsensor vor und nach dem Getriebe angeordnet, wobei der Rotationswinkelsensor vor dem Getriebe vorteilhafterweise ein Rotorpositionssensor des Elektromotors des Feedback-Aktuators ist der Rotationswinkelsensor nach dem Getriebe vorteilhafterweise ein nur singleturn-fähiger Lenkwinkelsensor. Vorteilhafterweise wird das Getriebe des Feedback-Aktuators anstelle eines separaten Sensor-Getriebes genutzt, um einen Drehwinkel der Lenkwelle, der größer als 360° sein kann, zu bestimmen, wobei die Sensorik zur Bestimmung des Drehwinkels der Lenkwelle dabei kleiner ausfällt, als bei einer Ausgestaltung mit Sensor-Getriebe. Vorteilhafterweise ermöglicht ein erfindungsgemäß ausgebildetes Lenksystem ohne zusätzlichen Hardware-Aufwand ein Bestimmen eines Drehwinkels der Lenkwelle, der größer als 360° sein kann, wobei vorteilhafterweise zudem - ebenfalls ohne zusätzlichen Hardware-Aufwand - eine Überwachung der Funktionsfähigkeit des Getriebes des Feedback-Aktuators ermöglicht ist.

Vorteilhafterweise ist dabei vorgesehen, dass zumindest einer der Winkelsensoren eine redundante Energieversorgung aufweist, insbesondere eine redundante Spannungsversorgung. Vorteilhafterweise wird hierdurch die Ausfallsicherheit erhöht.

Gemäß einer vorteilhaften Ausgestaltung des Lenksystems ist zumindest einer der Winkelsensoren ein Rotorpositionssensor, insbesondere der zweite Winkelsensor zur Erfassung des Drehwinkels der Motorwelle.

Weiter vorteilhaft ist zumindest einer der Winkelsensoren ein singleturn-fähiger Sensor, also ein kostengünstiger Sensor, der an sich nur einen Drehwinkel zwischen 0° und 360° bestimmen kann, wobei vorteilhafterweise ein tatsächlicher Absolutwinkel, der auch größer als 360° sein kann, unter Nutzung des in der Steuereinheit hinterlegten Modells ermittelt wird. Vorteilhafterweise lassen sich auf diese Weise Kosten einsparen.

Gemäß einer weiteren vorteilhaften Ausgestaltung umfasst die Funktionsfähigkeitsüberwachung die Bildung einer Sensorwertdifferenz zwischen dem Sensorwert des ersten Winkelsensors in einem bestimmten Zeitpunkt und dem Sensorwert des zweiten Winkelsensors in demselben Zeitpunkt umfasst. Insbesondere umfasst die Funktionsfähigkeitsüberwachung den Vergleich der gebildeten Sensorwertdifferenz mit einem definierten Schwellwert. Weiter vorteilhaft umfasst die Funktionsfähigkeitsüberwachung die Berücksichtigung von den Zustand und/oder die Eigenschaften des Getriebes beschreibenden Faktoren, die insbesondere die Getriebesteifigkeit, das Getriebespiel, die Getriebetemperatur und/oder die Getriebeträgheit umfassen.

Vorteilhafterweise ist die Steuerungseinheit dazu ausgebildet, anhand eines Sensorwerts des ersten Winkelsensors in einem bestimmten Zeitpunkt und eines Sensorwerts des zweiten Winkelsensors in demselben Zeitpunkt eine Zahnübersprungkontrolle des Getriebes durchzuführen, wobei die Zahnübersprungkontrolle vorteilhafterweise die Berücksichtigung eines einen zahnübersprungsfreien Zustand des Getriebes repräsentierenden Zusammenhangs zwischen den Sensorwerten des ersten Winkelsensors und den Sensorwerten des zweiten Winkelsensors umfasst.

Eine vorteilhafte Weiterbildung des Lenksystems sieht dabei vor, dass dieses einen internen Fehlerspeicher aufweist, der dazu ausgebildet ist, Informationen betreffend Zahnübersprünge zu speichern. Vorzugsweise umfasst die Steuereinheit den internen Fehlerspeicher. Die Informationen betreffend Zahnübersprünge umfassen dabei insbesondere die Anzahl der übersprungenen Zähne, die Richtung der Zahnübersprünge und Zeitstempel.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1a: in einer vereinfachten perspektivischen Darstellung ein Ausführungsbeispiel für ein erfindungsgemäß ausgebildetes elektromechanisches Lenksystem;
- Fig. 1b: in einer vereinfachten perspektivischen Darstellung ein weiteres Ausführungsbeispiel für eine Lenkwelle und einen Feedback-Aktuator eines erfindungsgemäß ausgebildeten elektromechanischen Lenksystems;
- Fig. 2: als Blockschaltbild ein Ausführungsbeispiel für ein Ermitteln eines multiturn-Drehwinkels der Lenkwelle bei der Ausführung eines erfindungsgemäß ausgebildeten Verfahrens;
- Fig. 3: als Blockschaltbild ein Ausführungsbeispiel für ein redundantes Ermitteln eines multiturn-Drehwinkels der Lenkwelle bei der Ausführung eines erfindungsgemäß ausgebildeten Verfahrens mit redundanter Spannungsversorgung;
- Fig. 4: als Blockschaltbild ein Ausführungsbeispiel für ein redundantes Ermitteln eines multiturn-Drehwinkels der Lenkwelle bei der Ausführung eines erfindungsgemäß ausgebildeten Verfahrens ohne redundante Spannungsversorgung;
- Fig. 5: als Blockschaltbild ein Ausführungsbeispiel für ein Ausführen eines erfindungsgemäß ausgebildeten Verfahrens bei erkanntem Zahnübersprung im Betrieb;
- Fig. 6: als Blockschaltbild ein weiteres Ausführungsbeispiel für ein Ausführen eines erfindungsgemäß ausgebildeten Verfahrens bei Zahnübersprung im stromlosen Zustand; und
- Fig. 7: als Blockschaltbild ein weiteres Ausführungsbeispiel für ein Ausführen eines erfindungsgemäß ausgebildeten Verfahrens.

In den verschiedenen Figuren sind gleiche Teile in der Regel mit den gleichen Bezugszeichen versehen und werden daher mitunter auch jeweils nur im Zusammenhang mit einer der Figuren erläutert.

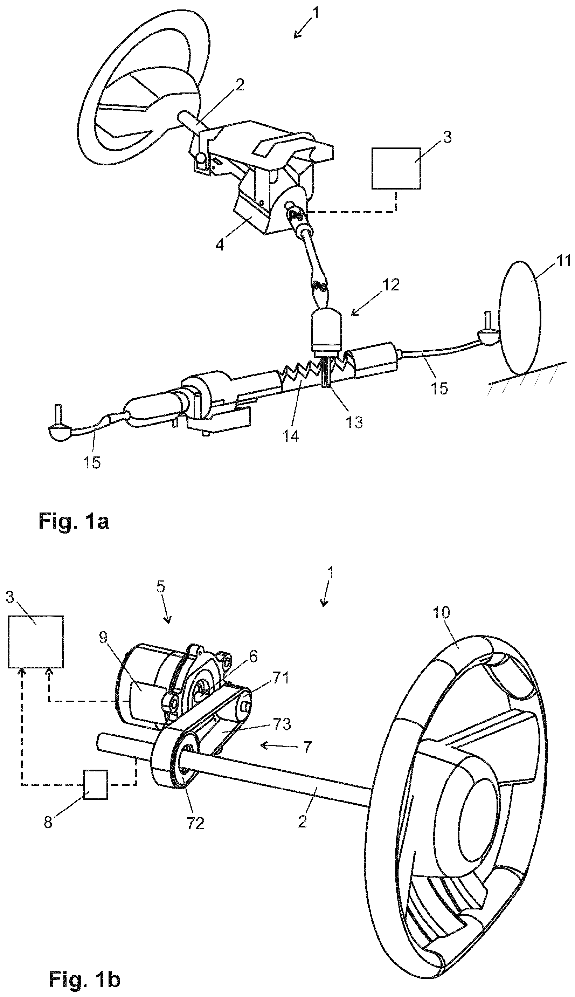

Fig. 1a zeigt ein Ausführungsbeispiel für ein elektromechanisches Lenksystem 1 in einer perspektivischen, vereinfachten Darstellung von schräg vorne in Fahrzeugfahrtrichtung. Das Lenksystem 1 für ein Kraftfahrzeug umfasst eine Lenksäule mit einer Lenkwelle 2, eine Steuereinheit 3, die in Fig. 1 lediglich schematisch dargestellt ist, und einem Feedback-Aktuator 4. In Fig. 1b sind in einem weiteren Ausführungsbeispiel die Lenkwelle 2 eines Lenksystems mit dem Feedback-Aktuator 4 detaillierter dargestellt.

An dem einem Fahrer zugewandten Ende der Lenkwelle 2 ist eine Lenkhandhabe 10, insbesondere ein Lenkrad, zur Eingabe eines Fahrerlenkwunsches beziehungsweise Lenkbefehls drehfest angeordnet, wobei ein Fahrer die als Lenkrad ausgebildete Lenkhandhabe 10 in bekannter Weise zur Eingabe seines Lenkbefehls drehen kann. Mittels des auf die Lenkwelle 2 und somit auch auf die Lenkhandhabe 10 wirkenden Feedback-Aktuators 4 kann einem Fahrer dabei insbesondere eine Rückmeldung über auf die Räder 11 des Lenksystems 1 beim Fahren beziehungsweise Rangieren wirkende Kräfte vermittelt werden.

Die Lenkwelle 2 des Lenksystems ist in diesem Ausführungsbeispiel zudem über ein Lenkgetriebe 12 mechanisch mit den lenkbaren Rädern 11 eines Kraftfahrzeugs gekoppelt. Das Lenkgetriebe 12 umfasst in diesem Ausführungsbeispiel ein Ritzel 13 und eine gezahnte Zahnstange 14, wobei das Lenkgetriebe 12 zur Übersetzung einer rotatorischen Bewegung des Ritzels 13 in eine translatorische Bewegung der Zahnstange 14 entlang deren Längsachse dient.

Die sich entlang ihrer Längsachse linear bewegende Zahnstange 14 ist in diesem Ausführungsbeispiel jeweils zu beiden Seiten des Kraftfahrzeugs mechanisch mit einer Spurstange 15 gekoppelt. Die Spurstangen 15 sind wiederum jeweils mit den Fahrzeugrädern 11 mechanisch gekoppelt. Das Lenkgetriebe 12 ist somit ausgebildet, einen Lenkbefehl unter Berücksichtigung von wenigstens einer Eingangsgröße in eine Lenkbewegung der lenkbaren Rädern 11 des Kraftfahrzeugs umzusetzen.

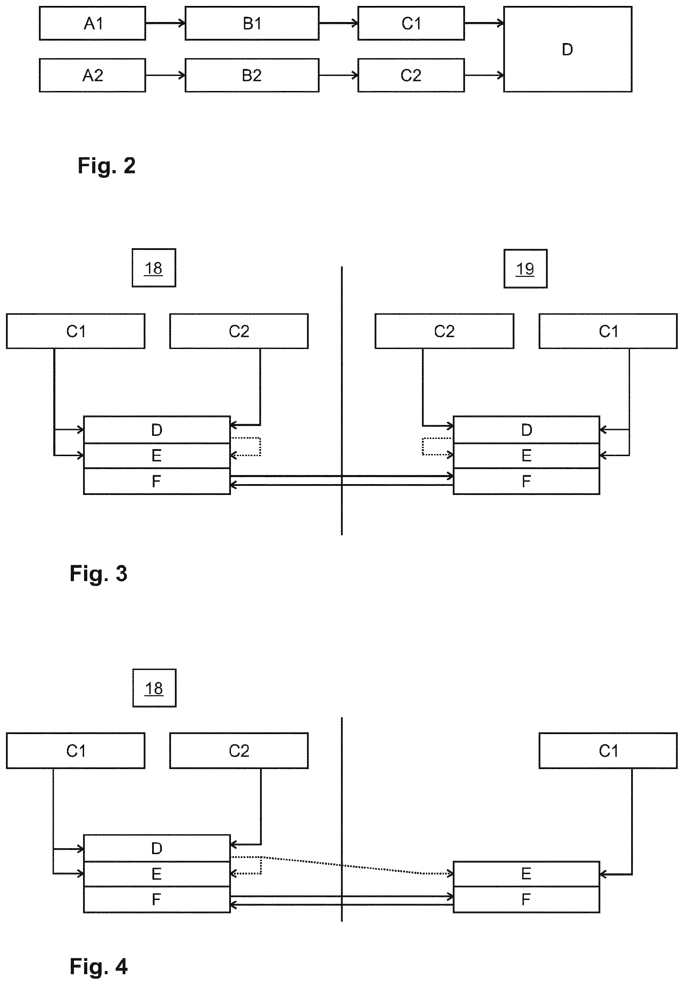

Der Feedback-Aktuator 4 des Lenksystems 1 umfasst, wie beispielhaft in Fig. 1b dargestellt, einen Elektromotor 5 mit einer Motorwelle 6 und ist ausgebildet, über ein Getriebe 7 mit einer Getriebeübersetzung ein Drehmoment auf die Lenkwelle 2 aufzubringen. Das Getriebe 7 weist dabei ein an der Motorwelle 6 drehfest angeordnetes antriebsseitiges Zahnrad 71 und ein an der Lenkwelle 2 drehfest angeordnetes abtriebseitiges Zahnrad 72 auf, die über einen Zahnriemen 73 miteinander verbunden sind. Das antriebsseitige Zahnrad 71 kann dabei insbesondere eine Zähnezahl von 12 aufweisen. Das abtriebseitige Zahnrad 72 kann insbesondere eine Zähnezahl von 64 aufweisen. Ein erster Winkelsensor 8, insbesondere ein multiturn-fähiger Lenkwinkelsensor, ist der Lenkwelle 2 zur Erfassung eines Drehwinkels der Lenkwelle 2 zugeordnet. Ein zweiter Winkelsensor 9, insbesondere ein Rotorpositionssensor, ist der Motorwelle 6 zur Erfassung eines Drehwinkels der Motorwelle 6 zugeordnet. Der von dem ersten Winkelsensor 8 als erster Sensorwert erfasste Drehwinkel der Lenkwelle 2 und der von dem zweiten Winkelsensor 9 als zweiter Sensorwert erfasste Drehwinkle der Motorwelle 6 werden dabei an die Steuereinheit 3 übertragen. Die Steuereinheit 3 prüft dabei basierend auf einem in der Steuereinheit hinterlegten Modell, das zumindest die Übersetzung des Getriebes 7 als Parameter berücksichtigt, ob der von dem ersten Winkelsensor 8 erfasste erste Sensorwert und der von dem zweiten Winkelsensor 9 erfasste zweite Sensorwert ein plausibles Wertepaar bilden, wobei die Steuereinheit 3 insbesondere ausgebildet ist, durch Auswertung des Wertepaares die Funktionsfähigkeit des Getriebes zu bewerten, und insbesondere einen Zahnübersprung zu erkennen. Details zu möglichen von der Steuereinheit 3 ausgeführten Verfahrensschritten werden nachfolgend unter Bezugnahme auf die in Fig. 2 bis Fig. 7 dargestellten Ausführungsbeispiele näher erläutert.

In Fig. 2 ist als Blockschaltbild dargestellt, dass in einem Schritt A1 mit dem ersten Winkelsensor ein Drehwinkel der Lenkwelle als erster Sensorwert, nachfolgend auch als Lenkwinkelsensorwert L bezeichnet, und zeitgleich in einem Schritt A2 mit dem zweiten Winkelsensor ein Drehwinkel der Motorwelle als zweiter Sensorwert, nachfolgend auch als Rotorwinkelsensorwert R bezeichnet, erfasst und an die Steuereinheit des Lenksystems übertragen wird. Für eine Geradeausfahrt sind eingespeicherte Werte L_geradeaus und R_geradeaus als erster Sensorwert beziehungsweise zweiter Sensorwert in einer Speichereinheit, insbesondere einer Speichereinheit der Steuereinheit, hinterlegt. Diese Werte sind durch eine Referenzfahrt änderbare Werte, mit denen der tatsächlich erfasste erste Sensorwert und zweite Sensorwert bei Geradeausfahrt in einen fixen Wert umgerechnet werden, insbesondere in einen Wert 0° oder einen Wert 180°.

Die Steuereinheit wendet in einem optionalen Schritt B1 einen Korrekturfaktor L_Korrektur auf den erfassten ersten Sensorwert L an und in einem optionalen Schritt B2 einen Korrekturfaktor R_Korrektur auf den erfassten zweiten Sensorwert R an. Die Korrekturfaktoren L_Korrektur und R_Korrektur sind dabei vorteilhafterweise ebenfalls in der Speichereinheit hinterlegt. Insbesondere ist vorgesehen, dass der Korrekturfaktor auf den erfassten ersten Sensorwert L beziehungsweise den erfassten zweiten Sensorwert R aufaddiert wird oder von diesen subtrahiert wird, insbesondere abhängig von der Drehrichtung. In einem weiteren Schritt C1 und einem weiteren C2 wird daraufhin ein genullter erster Sensorwert L_0 beziehungsweise ein genullter zweiter Sensorwert R_0 bereitgestellt, sodass der tatsächlich bezogen auf eine Ausgangslage, insbesondere bezogen auf eine Ausgangslage von 0°, Lenkwinkelsensorwert beziehungsweise Rotorwinkelsensorwert erhalten wird. Aus dem Wertepaar, also dem genullten ersten Sensorwert L_0 und dem genullten zweiten Sensorwert R_0, wird dann von der Steuereinheit basierend auf dem in der Steuereinheit hinterlegten Modell für das Getriebe des Feedback-Aktuators in einem Schritt D der Absolutwinkel, den die Lenkwelle eingenommen hat, bestimmt. Dabei berücksichtigt das Modell die Getriebeübersetzung des Getriebes. Beispielsweise wird bei einer Zähnezahl Z1 = 64 des abtriebseitigen Zahnrads und einer Zähnezahl Z2 = 12 des antriebsseitigen Zahnrads wird eine Übersetzung i_g = 16/3 von dem Modell berücksichtigt. Ein Drehwinkel der Motorwelle von 180° wird entsprechend ein Drehwinkel der Lenkwelle von 33,75° zugeordnet. Der Multiturnbereich der Lenkwelle ist vorteilhafterweise ebenfalls in der Steuereinheit hinterlegt und beträgt beispielsweise ±540°. Die Lenkwelle kann über die Lenkhandhabe also in dem Fall ausgehend von einer Geradeausfahrstellung der Räder des Lenksystems um 540° in die eine Richtung und um 540° in die andere Richtung gedreht werden oder, anders ausgedrückt, die Lenkwelle kann 1,5 Umdrehungen in die eine Richtung und 1,5 Umdrehungen in die andere Richtung gedreht werden. Insofern wiederholt sich für einen ersten Sensorwert von 22,5° jeweils ein Durchlauf von 0° des erfassten zweiten Sensorwerts.

Für eine beispielhafte Bestimmung des Absolutwinkels sei angenommen, dass in den Schritten C1 und C2 als Wertepaar für den genullten Rotorwinkelsensorwert R_0 = -90° und für den genullten Lenkwinkelsensorwert L_0 = -61,875° bestimmt wurde. Der Lenkwinkelsensorwert X wird bezogen auf R_0 = 0° zu X = L_0 - (R_0/i_g) bestimmt. Mit den genannten Werten ergibt sich damit für X = -61,875° - ((-90°)/(16/3)) und somit für X = -45°. Für einen ersten Sensorwert von -45° erfolgt wegen -45°/22,5° = 2 zweimal ein Durchlauf von 0° (bzw. 180°), sodass sich ein Additionswert L_Add von -360° ergibt. Vorteilhafterweise wird auf diese Weise auch geprüft, ob der erfasste erste Sensorwert und der erfasste zweite Sensorwert ein plausibles Wertepaar liefern.

Der Absolutwinkel W_abs wird in diesem Ausführungsbeispiel dann zu W_abs = L_0 + L_add und bezogen auf das konkrete Zahlenbeispiel zu W_abs = -61,875 + (-360°) = -421,875° bestimmt.

Fig. 3 zeigt ein Ausführungsbeispiel für den Fall, dass ein Rotorwinkelsensor mit redundanter Spannungsversorgung, nämlich einer ersten Spannungsversorgung 18 und einer zweiten Spannungsversorgung 19, vorgesehen ist. Dabei werden jeweils in einem Schritt C1 der genullte Lenkwinkelsensorwert L_0 und in einem Schritt C2 der genullte Rotorwinkelsensorwert R_0 bereitgestellt und in einem weiteren Schritt D jeweils aus diesem Wertepaar der Absolutwinkel der Lenkwelle bestimmt. In einem weiteren Schritt E wird jeweils ein virtueller Multiturn-Zähler, dem bei Inbetriebnahme eine Startwert vorgegeben wird, und der ansonsten den Wert des bestimmten Absolutwinkels und des bereitgestellten genullten Lenkwinkelsensorwerts L_0 berücksichtigt, aktualisiert. In einem Schritt F werden die so redundant ermittelten Ergebnisse miteinander abgeglichen und auf Plausibilität geprüft. Insbesondere kann vorgesehen sein, dass der Schritt F jeweils in einer eigenen Recheneinheit durchgeführt wird.

Fig. 4 zeigt ein Ausführungsbeispiel für den Fall, dass ein Rotorwinkelsensor ohne redundante Spannungsversorgung vorgesehen ist, aber durch das Vorsehen von zwei virtuellen Multiturn-Zählern die Ausfallsicherheit dennoch erhöht ist. Dabei werden in einem Schritt C1 der genullte Lenkwinkelsensorwert L_0 und in einem Schritt C2 der genullte Rotorwinkelsensorwert R_0 bereitgestellt und in einem weiteren Schritt D aus diesem Wertepaar der Absolutwinkel der Lenkwelle bestimmt. In einem Schritt E wird ein erster virtueller Multiturn-Zähler, dem bei Inbetriebnahme eine Startwert vorgegeben wird, und der ansonsten den Wert des bestimmten Absolutwinkels und des bereitgestellten genullten Lenkwinkelsensorwerts L_0 berücksichtigt, und ein zweiter virtueller Multiturn-Zähler, dem bei Inbetriebnahme eine Startwert vorgegeben wird, und der ansonsten den Wert des bestimmten Absolutwinkels und des bereitgestellten genullten Lenkwinkelsensorwerts L_0 berücksichtigt, aktualisiert. In einem Schritt F werden die so redundant ermittelten Ergebnisse miteinander abgeglichen und auf Plausibilität geprüft. Insbesondere kann vorgesehen sein, dass der Schritt F jeweils in einer eigenen Recheneinheit durchgeführt wird.

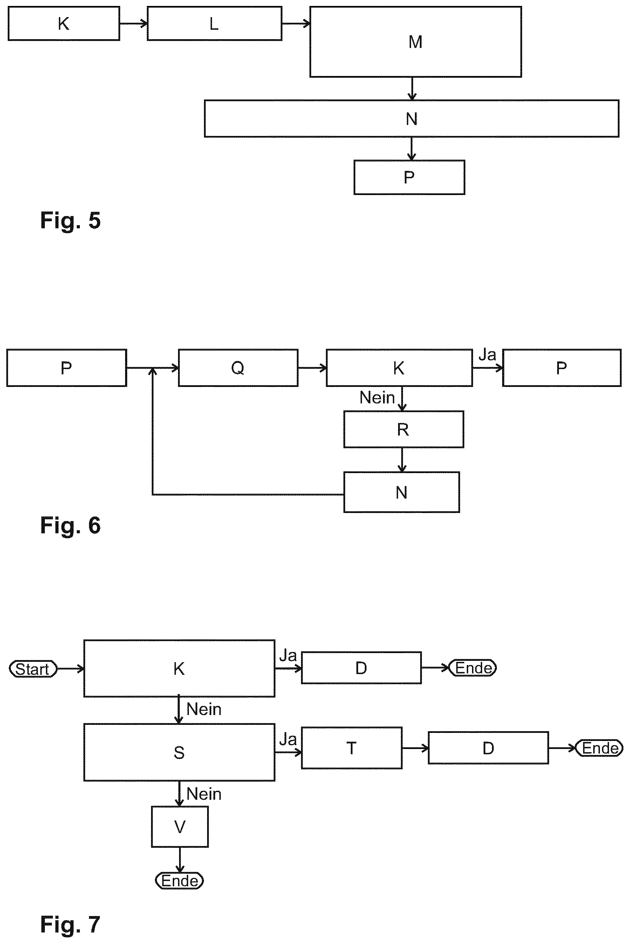

Bei dem in Fig. 5 gezeigten Ausführungsbeispiel für ein erfindungsgemäß ausgebildetes Verfahren ist vorgesehen, dass, wie auch zuvor beschrieben, ein erster Sensorwert und ein zweiter Sensorwert erfasst und als Wertepaar mit genullten Sensorwerten bereitgestellt werden. Basierend auf einem in der Steuereinheit hinterlegten Modell, das die Getriebeübersetzung des Getriebes des Feedback-Aktuators berücksichtigt, wird in einem Schritt K geprüft, ob der erfasste erste Sensorwert und der erfasste zweite Sensorwert ein plausibles Wertepaar bilden. In diesem Ausführungsbeispiel ist dabei vorgesehen, dass der erfasste erste Sensorwert und der erfasste zweite Sensorwert ein plausibles Wertepaar bilden, wenn sich entsprechend dem hinterlegten Modell ein ganzzahliges Vielfaches des zweiten Sensorwertes in den ersten Sensorwert derart überführen lässt, dass ein vorgegebener Abweichungsgrenzwert A_G unterschritten wird.

Beispielhaft werden wiederum die Zahlen aus dem unter Bezugnahme auf Fig. 2 ausgeführten Zahlenbeispiel zugrunde gelegt, bei dem als Wertepaar für den genullten Rotorwinkelsensorwert R_0 = -90° und für den genullten Lenkwinkelsensorwert L_0 = -61,875° bestimmt wurde. Da der Lenkwinkelsensorwert X hier bezogen auf R_0 = 0° zu X = L_0 - (R_0/i_g) bestimmt wurde, also zu X = -61,875° - ((-90°)/(16/3))) und somit zu X = -45°, erfolgte für einen ersten Sensorwert von -45° wegen -45°/22,5° = 2. Einen Abweichungswert von einem ganzzahligen Vielfachen dieses Wertes gibt es hier nicht, sodass für den Fall der Abweichungsgrenzwert A_G unterschritten wäre.

Anders verhält es sich, wenn bei ansonsten gleichen Zahlenwerten z.B. für R_0 = -84,375° (-90° + 5,625°) gelten würden. Dann wäre X = -46,05° und wegen -46,05°/22,5° = -2,047 bliebe zu einem ganzzahligen Vielfachen von 2 ein Abweichungswert von 0,047, wobei vorgesehen ist, dass 0,047 > A_G. Der Abweichungswert von 0,047 würde in diesem Fall also den Abweichungsgrenzwert A_G überschreiten und es würde erkannt, dass das Wertepaar nicht plausibel ist.

Bei diesem Ausführungsbeispiel ist weiter vorgesehen, dass eine Vielzahl von definierten weiteren Abweichungsgrenzwerten A_G# hinterlegt ist. Diese hinterlegten weiteren Abweichungsgrenzwerte sind jeweils einer konkreten Anzahl von Zahnübersprüngen des Zahnriemens des Getriebes des Feedback-Aktuators zugeordnet. Wenn von der Steuereinheit ermittelt wurde, dass der erfasste erste Sensorwert und der erfasste zweite Sensorwert kein plausibles Wertepaar bilden, prüft die Steuereinheit dabei weiter, ob einer der hinterlegten weiteren Abweichungsgrenzwerte erreicht wurde, der ermittelte Abweichungswert also insbesondere einem der hinterlegten Abweichungsgrenzwerte entspricht. Die Abweichungsgrenzwerte resultieren dabei aus einer durch einen Zahnübersprung oder aus mehreren Zahnübersprüngen resultierenden Abweichung von dem Winkelwert für den sich für die Motorwelle ein Drehwinkel 0° wiederholt. Bezogen auf das Zahlenbeispiel ergeben sich somit insbesondere Abweichungen von dem Wert 22,5° beziehungsweise einem Vielfachen von 22,5° von einem Vielfachen von etwa 5,6°. Würde sich der genullte Rotorwinkelsensorwert R_0 also als ein ganzzahliges Vielfaches k des genullten Lenkwinkelsensor L_0 ± einem Vielfachen n der hinterlegten Abweichung, also beispielsweise 5,6°, ergeben, so würde auf eine Anzahl n von Zahnübersprüngen erkannt, wobei das Vorzeichen der Abweichung die Richtung des Zahnübersprungs angibt.

Bei dem in Fig. 5 dargestellten Ausführungsbeispiel ist nun vorgesehen, dass bei der Prüfung im Schritt K erkannt wurde, dass eine entsprechende hinterlegte Abweichung vorliegt. In einem nächsten Schritt L prüft die Steuereinheit, ob für die Dauer einer definierten Zeitspanne, beispielsweise für zehn Sekunden, der hinterlegte Abweichungsgrenzwert erreicht wird. Ist dies der Fall, so wird in einem weiteren Schritt M die bestimmte Anzahl der übersprungenen Zähne, die Richtung der übersprungenen Zähne sowie das Datum und die Uhrzeit der Detektion gespeichert, insbesondere in einer Speichereinheit der Steuereinheit oder einem zentralen Fehlerspeicher des Kraftfahrzeugs.

Weiter wird in einem Schritt N ein Korrekturwert für den Rotorwinkelsensorwert bereitgestellt. Für den Korrekturwert R_Korrektur wird das Produkt aus der Anzahl der übersprungenen Zähne und 360° gebildet und durch die gesamte Zähnezahl des antriebsseitigen Zahnrads dividiert. Die Anzahl der übersprungenen Zähne wird dabei mit einem positiven Vorzeichen versehen, wenn die Richtung des Zahnübersprungs positiv ist und mit einem negativen Vorzeichen versehen, wenn die Richtung des Zahnübersprungs negativ ist. Mit dem entsprechenden Korrekturwert wird in einem Schritt P zum Normalbetrieb zurückgekehrt.

Bei dem in Fig. 6 dargestellten Ausführungsbeispiel zur Ausführung eines erfindungsgemäß ausgebildeten Verfahrens zum Betreiben des elektromechanischen Lenksystems wird eine Zahnübersprungskontrolle durchgeführt. Ausgehend von einem Normalbetrieb P, bei dem der Feedback-Aktuator bestromt wird, wird in einem Schritt Q der Elektromotor des Feedback-Aktuators spannungsfrei geschaltet und dann in einem Schritt K geprüft, ob der prüft, ob der erfasste erste Sensorwert des nach dem Getriebe angeordneten Winkelsensors und der erfasste zweite Sensorwert des vor dem Getriebe angeordneten Winkelsensors ein plausibles Wertepaar bilden. Ist dies der Fall, so wird ohne Veränderungen in einem Schritt P das elektromechanische Lenksystem weiter im Normalbetrieb betrieben. Ergibt die Prüfung in dem Schritt K hingegen, dass der erfasste erste Sensorwert und der erfasste zweite Sensorwert kein plausibles Wertepaar bilden, so wird in einem Schritt R eine Referenzfahrt gestartet, insbesondere mit vorgegebenen Lenkeinschlagswinkeln, insbesondere Lenkeinschlagswinkeln bis zu einem mechanischen Endanschlag des Lenksystems. Dabei wird insbesondere, wie unter Bezugnahme auf Fig. 5 beschrieben, geprüft, ob und in welchem Umfang Zahnübersprünge auftreten beziehungsweise aufgetreten sind, und basierend auf den erfassen Informationen in einem Schritt N ein Korrekturwert für den Rotorwinkelsensor und/oder eine Korrekturwert für den Lenkwinkelsensor neu gesetzt. Mit den neu gesetzten Korrekturwerten kann dann, beginnend mit Schritt Q erneut geprüft werden, ob unter Berücksichtigung der nun neu gesetzten Korrekturwerte, die die alten Korrekturwerte überschreiben, der erfasste erste Sensorwert und der erfasste zweite Sensorwert ein plausibles Wertepaar bilden.

Fig. 7 zeigt als vereinfachtes Blockschaltdiagramm ein weiteres Ausführungsbeispiel für die Ausbildung eines erfindungsgemäß ausgebildeten Verfahrens, gemäß dem das elektromechanische Lenksystem betrieben werden kann. Dabei wird beim Betrieb von der Steuereinheit des Lenksystems basierend auf dem in der Steuereinheit hinterlegten Modell, dass die Getriebeübersetzung und darüber hinaus weitere Parameter, insbesondere die Getriebesteifigkeit, das Getriebespiel, die Getriebetemperatur, die Getriebeträgheit, die Zähnezahl des antriebsseitigen Zahnrads des Getriebes und/oder die Zähnezahl des abtriebseitigen Zahnrads des Getriebes, berücksichtigt, in einem Schritt K geprüft, ob der erfasste erste Sensorwert und der erfasste zweite Sensorwert ein plausibles Wertepaar bilden. Ergibt diese Prüfung, dass der erfasste erste Sensorwert und der erfasste zweite Sensorwert ein plausibles Wertepaar bilden, und somit insbesondere ein vorgegebener Abweichungsgrenzwert unterschritten ist, so wird in einen Schritt D basierend auf den erfassten Sensorwerten ein Absolutwinkel der Lenkwelle ermittelt. Das kann insbesondere auch, wie unter Bezugnahmen auf Fig. 2 erläutert, erfolgen.

Ergibt die Prüfung in dem Schritt K hingegen, dass der erfasste erste Sensorwert und der erfasste zweite Sensorwert kein plausibles Wertepaar bilden, so wird in einem weiteren Schritt S geprüft, ob ein in der Steuereinheit hinterlegter Abweichungsgrenzwert, der einer konkreten Anzahl von Zahnübersprüngen zugeordnet ist, mit einer vorgegebenen Genauigkeit erreicht wird. Ist das der Fall, so kann die durch den Zahnsprung oder die Zahnsprünge verursachte Unplausibilität korrigiert werden. Da nun bekannt ist, dass wenigstens ein Zahnübersprung erfolgt ist, wird daher in diesem Ausführungsbeispiel in einem Schritt T die Lenkwelle in mindestens einen mechanischen Anschlag des Lenksystems verbracht und die durch den wenigstens einen Zahnsprung verursachte Abweichung wird bestimmt und korrigiert. Mit den entsprechend angepassten Sensorwerten wird dann in einem Schritt D der Absolutwinkel der Lenkwelle ermittelt.

Ergibt die Prüfung in dem Schritt S, dass bei einem ermittelten unplausiblen Wertepaar ein in der Steuereinheit hinterlegter Abweichungsgrenzwert, der einer konkreten Anzahl von Zahnübersprüngen zugeordnet ist, nicht mit einer vorgegebenen Genauigkeit erreicht wird, so lässt sich der Absolutwinkel der Lenkwelle nicht sicher bestimmen. In einem Schritt V wird daher das Kraftfahrzeug stillgesetzt. Das heißt, dass insbesondere ein Losfahren nicht erlaubt wird.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Lenksystem
- 2: Lenkwelle
- 3: Steuereinheit
- 4: Feedback-Aktuator
- 5: Elektromotor
- 6: Motorwelle
- 7: Getriebe
- 71: antriebsseitiges Zahnrad des Getriebes (7)
- 72: abtriebseitiges Zahnrad des Getriebes (7)
- 73: Zahnriemen
- 8: erster Winkelsensor
- 9: zweiter Winkelsensor
- 10: Lenkhandhabe
- 11: Rad
- 12: Lenkgetriebe
- 13: Ritzel
- 14: Zahnstange
- 15: Spurstange
- 18: erste Spannungsversorgung
- 19: zweite Spannungsversorgung

- A1: Erfassen des ersten Sensorwertes
- A2: Erfassen des zweiten Sensorwertes
- B1: Anwenden eines Korrekturfaktors auf den erfassten ersten Sensorwert
- B2: Anwenden eines Korrekturfaktors auf den erfassten zweiten Sensorwert
- C1: Bereitstellen des ersten Sensorwertes genullt
- C2: Bereitstellen des zweiten Sensorwertes genullt
- D: Ermitteln des Absolutwinkels der Lenkwelle (2)
- E: Aktualisieren des virtuellen Multiturn-Zählers
- F: Plausibilitätsprüfung der ermittelten Ergebnisse
- K: Prüfung auf Plausibilität des aus dem erfassten ersten Sensorwert und dem erfassten zweiten Sensorwert gebildeten Wertepaares
- L: Prüfung, ob Abweichung für aus erfassten ersten Sensorwerten und dem erfassten zweiten Sensorwerten gebildeten Wertepaaren stabil ist
- M: Speichern von Informationen bezüglich eines Getriebeproblems
- N: Bereitstellen eines Korrekturwerts
- P: Normalbetrieb
- Q: Versetzen des Elektromotors des Feedback-Aktuators in einen spannungsfreien Zustand
- R: Durchführen einer Referenzfahrt
- S: Prüfung, ob das Wertepaar in einer vorgegebenen Weise unplausibel ist
- T: Verbringen der Lenkwelle in mindestens einen Lenkanschlag / Bereitstellung eines Korrekturwerts
- V: Stillsetzen des Kraftfahrzeugs

## Patentansprüche

1. Verfahren zum Betreiben eines elektromechanischen Lenksystems (1) für ein Kraftfahrzeug mit einer Lenkwelle (2), einer Steuereinheit (3) und einem Feedback-Aktuator (4), der einen Elektromotor (5) mit einer Motorwelle (6) aufweist und ausgebildet ist, über ein Getriebe (7) mit einer Getriebeübersetzung ein Drehmoment auf die Lenkwelle (2) aufzubringen, wobei zu einem Zeitpunkt mit einem ersten Winkelsensor (8) ein Drehwinkel der Lenkwelle (2) als erster Sensorwert erfasst wird und mit einem zweiten Winkelsensor (9) ein Drehwinkel der Motorwelle (6) als zweiter Sensorwert erfasst wird, **dadurch gekennzeichnet, dass** die Steuereinheit (3) basierend auf einem in der Steuereinheit (3) hinterlegten Modell, das zumindest die Getriebeübersetzung als Parameter des Getriebes (7) berücksichtigt, prüft, ob der erfasste erste Sensorwert und der erfasste zweite Sensorwert ein plausibles Wertepaar bilden.

2. Verfahren nach Anspruch 1, **dadurch gekennzeichnet, dass** die Steuereinheit (3) auf eine fehlerhafte Funktion des Getriebes (7) erkennt, wenn der erfasste erste Sensorwert und der erfasste zweite Sensorwert kein plausibles Wertepaar bilden.

3. Verfahren nach Anspruch 1 oder Anspruch 2, **dadurch gekennzeichnet, dass** das Getriebe (7) einen Zahnriemen (73) umfasst, über den die Motorwelle (6) mit der Lenkwelle (2) verbunden ist, wobei die Steuereinheit (3) basierend auf dem hinterlegten Modell weiter eine Zahnübersprungskontrolle durchführt.

4. Verfahren nach einem der vorstehenden Ansprüchen, **dadurch gekennzeichnet, dass** das hinterlegte Modell wenigstens einen der nachfolgenden Parameter als weiteren Parameter berücksichtigt: Getriebesteifigkeit; Getriebespiel; Getriebetemperatur; Getriebeträgheit; Zähnezahl eines antriebsseitigen Zahnrads (71) des Getriebes (7), Zähnezahl eines abtriebseitigen Zahnrads (72) des Getriebes (7).

5. Verfahren nach einem der vorstehenden Ansprüche, **dadurch gekennzeichnet, dass** der erfasste erste Sensorwert und der erfasste zweite Sensorwert ein plausibles Wertepaar bilden, wenn sich entsprechend dem hinterlegten Modell ein ganzzahliges Vielfaches des zweiten Sensorwertes in den ersten Sensorwert derart überführen lässt, dass ein vorgegebener Abweichungsgrenzwert unterschritten wird.

6. Verfahren nach Anspruch 5, **dadurch gekennzeichnet, dass** der Abweichungsgrenzwert von wenigstens einem Parameter des Modells abhängig ist.

7. Verfahren nach einem der vorstehenden Ansprüche, **dadurch gekennzeichnet, dass** das Getriebe (7) einen Zahnriemen (73) umfasst, über den die Motorwelle (6) mit der Lenkwelle (2) verbunden ist, wobei eine Vielzahl von definierten weiteren Abweichungsgrenzwerten hinterlegt ist, die jeweils einer konkreten Anzahl von Zahnübersprüngen zugeordnet sind, wobei die Steuereinheit (3), wenn der erfasste erste Sensorwert und der erfasste zweite Sensorwert kein plausibles Wertepaar bilden, weiter prüft, ob einer der hinterlegten weiteren Abweichungsgrenzwerte erreicht wurde.

8. Verfahren nach Anspruch 7, **dadurch gekennzeichnet, dass** die Steuereinheit (3), wenn einer der hinterlegten weiteren Abweichungsgrenzwerte erreicht wurde, auf eine dem Abweichungsgrenzwert zugeordnete Anzahl von erfolgten Zahnsprüngen erkennt.

9. Verfahren nach Anspruch 7 oder Anspruch 8, **dadurch gekennzeichnet, dass** die Steuereinheit (3) prüft, ob für die Dauer einer definierten Zeitspanne einer der hinterlegten Abweichungsgrenzwerte erreicht wird.

10. Verfahren nach einem der Ansprüche 7 bis 9, **dadurch gekennzeichnet, dass** die Richtung des Zahnübersprungs bestimmt wird.

11. Verfahren nach einem der Ansprüche 7 bis 10, **dadurch gekennzeichnet, dass** die Steuereinheit (3) unter Verwendung zumindest einer der ermittelten Informationen bezüglich einer erkannten Zahnübersprungskontrolle einen Korrekturfaktor bezüglich des erkannten Zahnübersprungs ermittelt und durch Anwendung des ermittelten Korrekturfaktors auf den erfassten ersten Sensorwert und/oder den erfassten zweiten Sensorwert eine Fehlerkorrektur durchführt.

12. Verfahren nach Anspruch 11, **dadurch gekennzeichnet, dass** das Ermitteln des Korrekturfaktors folgende Schritte umfasst:
Definieren einer positiven Richtung des Zahnübersprungs und einer negativen Richtung des Zahnübersprungs;
Versehen der Anzahl der übersprungenen Zähne mit positivem Vorzeichen, wenn die Richtung des Zahnübersprungs positiv ist;
Versehen der Anzahl der übersprungenen Zähne mit negativem Vorzeichen, wenn die Richtung des Zahnübersprungs negativ ist;
Multiplizieren der mit dem entsprechenden Vorzeichen versehenen Anzahl der übersprungenen Zähne mit 360°;
Dividieren der mit dem entsprechenden Vorzeichen versehenen und mit 360° multiplizierten Anzahl der übersprungenen Zähne durch die Zähnezahl des antriebsseitigen Zahnrads des Getriebes.

13. Verfahren nach einem der vorstehenden Ansprüche, **dadurch gekennzeichnet, dass** die Steuereinheit (3) basierend auf dem Modell einen Absolutwinkel, den die Lenkwelle (2) einnimmt, bestimmt.

14. Elektromechanisches Lenksystem (1) für ein Kraftfahrzeug umfassend eine Lenkwelle (2), eine Steuereinheit (3) und einen Feedback-Aktuator (4), der einen Elektromotor (5) mit einer Motorwelle (6) aufweist und ausgebildet ist, über ein Getriebe (7) mit einer vorgegebenen Getriebeübersetzung ein Drehmoment auf die Lenkwelle (2) aufzubringen, wobei ein erster Winkelsensor (8) der Lenkwelle (2) zur Erfassung eines Drehwinkels der Lenkwelle (2) zugeordnet ist und ein zweiter Winkelsensor (9) der Motorwelle (6) zur Erfassung eines Drehwinkels der Motorwelle (6) zugeordnet ist, **dadurch gekennzeichnet, dass** die Steuereinheit (3) ausgebildet ist, das Lenksystem (1) nach einem Verfahren gemäß einem der vorstehenden Ansprüche zu betreiben.

15. Lenksystem (1) nach Anspruch 14, **dadurch gekennzeichnet, dass** zumindest einer der Winkelsensoren (8, 9) eine redundante Energieversorgung (18, 19) aufweist.

## Claims

1. Method for operating an electromechanical steering system (1) for a motor vehicle with a steering shaft (2), a control unit (3) and a feedback actuator (4), which has an electric motor (5) with a motor shaft (6) and is designed to apply a torque to the steering shaft (2) via a gearbox (7) with a gear ratio, wherein at a point in time a first angle sensor (8) is used to detect a rotation angle of the steering shaft (2) as a first sensor value and a second angle sensor (9) is used to detect a rotation angle of the motor shaft (6) as a second sensor value, **characterized in that** the control unit (3) checks whether the detected first sensor value and the detected second sensor value form a plausible pair of values based on a model stored in the control unit (3), which model takes into account at least the gear ratio as a parameter of the gearbox (7).

2. Method according to claim 1, **characterized in that** the control unit (3) detects a faulty function of the transmission (7) if the detected first sensor value and the detected second sensor value do not form a plausible pair of values.

3. Method according to claim 1 or claim 2, **characterized in that** the transmission (7) comprises a toothed belt (73) via which the motor shaft (6) is connected to the steering shaft (2), wherein the control unit (3) further performs a tooth skipping monitoring based on the stored model.

4. Method according to one of the preceding claims, **characterized in that** the stored model takes into account at least one of the following parameters as a further parameter: gearbox stiffness; gearbox backlash; gearbox temperature; gearbox inertia; number of teeth of an input-side gearwheel (71) of the gearbox (7), number of teeth of an output-side gearwheel (72) of the gearbox (7).

5. Method according to one of the preceding claims, **characterized in that** the detected first sensor value and the detected second sensor value form a plausible pair of values if, according to the stored model, an integer multiple of the second sensor value can be converted into the first sensor value in such a way that a predetermined deviation limit value is undershot.

6. Method according to claim 5, **characterized in that** the deviation limit value is dependent on at least one parameter of the model.

7. Method according to one of the preceding claims, **characterized in that** the transmission (7) comprises a toothed belt (73), via which the motor shaft (6) is connected to the steering shaft (2), wherein a plurality of defined further deviation limit values are stored, which are each assigned to a specific number of tooth skips, wherein the control unit (3), if the detected first sensor value and the detected second sensor value do not form a plausible pair of values, further checks whether one of the stored further deviation limit values has been reached.

8. Method according to claim 7, **characterized in that** the control unit (3), when one of the stored further deviation limit values has been reached, detects a number of tooth skips associated with the deviation limit value.

9. Method according to claim 7 or claim 8, **characterized in that** the control unit (3) checks whether one of the stored deviation limit values is reached for the duration of a defined period of time.

10. Method according to one of claims 7 to 9, **characterized in that** the direction of tooth skipping is determined.

11. Method according to one of claims 7 to 10, **characterized in that** the control unit (3), using at least one of the determined information relating to a detected tooth skipping monitoring, determines a correction factor relating to the detected tooth skipping and performs an error correction by applying the determined correction factor to the detected first sensor value and/or the detected second sensor value.

12. Method according to claim 11, **characterized in that** the determination of the correction factor comprises the following steps:
Defining a positive direction of tooth skipping and a negative direction of tooth skipping;
Assigning a positive sign to the number of skipped teeth if the direction of the tooth skip is positive;
Assigning a negative sign to the number of skipped teeth if the direction of the tooth skip is negative;
Multiplying the number of skipped teeth with the corresponding sign by 360°;
Dividing the number of skipped teeth, multiplied by 360° and provided with the corresponding sign, by the number of teeth of the drive-side gearwheel of the gearbox.

13. Method according to one of the preceding claims, **characterized in that** the control unit (3) determines an absolute angle assumed by the steering shaft (2) based on the model.

14. Electromechanical steering system (1) for a motor vehicle, comprising a steering shaft (2), a control unit (3) and a feedback actuator (4) which has an electric motor (5) with a motor shaft (6) and is designed to apply a torque to the steering shaft (2) via a gearbox (7) with a predetermined gear ratio, wherein a first angle sensor (8) is assigned to the steering shaft (2) for detecting an angle of rotation of the steering shaft (2) and a second angle sensor (9) is assigned to the motor shaft (6) for detecting an angle of rotation of the motor shaft (6), **characterized in that** the control unit (3) is designed to operate the steering system (1) according to a method according to one of the preceding claims.

15. Steering system (1) according to claim 14, **characterized in that** at least one of the angle sensors (8, 9) has a redundant power supply (18, 19).

## Revendications

1. Procédé pour faire fonctionner un système de direction électromécanique (1) pour un véhicule automobile avec un arbre de direction (2), une unité de commande (3) et un actionneur à rétroaction (4) qui présente un moteur électrique (5) avec un arbre de moteur (6) et qui est conçu pour appliquer un couple de rotation à l'arbre de direction (2) par l'intermédiaire d'un engrenage (7) avec un rapport de transmission, un angle de rotation de l'arbre de direction (2) étant détecté à un moment comme première valeur de capteur avec un premier capteur d'angle (8) et un angle de rotation de l'arbre de moteur (6) étant détecté comme deuxième valeur de capteur avec un deuxième capteur d'angle (9), **caractérisé en ce que** l'unité de commande (3) vérifie, sur la base d'un modèle enregistré dans l'unité de commande (3) et qui tient compte au moins du rapport de transmission comme paramètre de l'engrenage (7), si la première valeur de capteur détectée et la deuxième valeur de capteur détectée forment une paire de valeurs plausible.

2. Procédé selon la revendication 1, **caractérisé en ce que** l'unité de commande (3) détecte un fonctionnement défectueux de l'engrenage (7) lorsque la première valeur de capteur détectée et la deuxième valeur de capteur détectée ne forment pas une paire de valeurs plausibles.

3. Procédé selon la revendication 1 ou la revendication 2, **caractérisé en ce que** l'engrenage (7) comprend une courroie dentée (73) par l'intermédiaire de laquelle l'arbre moteur (6) est relié à l'arbre de direction (2), l'unité de commande (3) effectuant en outre un contrôle de saut de dent sur la base du modèle enregistré.

4. Procédé selon l'une des revendications précédentes, **caractérisé en ce que** le modèle déposé prend en compte au moins l'un des paramètres suivants comme paramètre supplémentaire: rigidité de l'engrenage; jeu de l'engrenage; température de l'engrenage; inertie de l'engrenage; nombre de dents d'un engrenage côté entrée (71) de l'engrenage (7), nombre de dents d'un engrenage côté sortie (72) de l'engrenage (7).

5. Procédé selon l'une des revendications précédentes, **caractérisé en ce que** la première valeur de capteur détectée et la deuxième valeur de capteur détectée forment une paire de valeurs plausibles si, conformément au modèle enregistré, un multiple entier de la deuxième valeur de capteur peut être converti en la première valeur de capteur de telle sorte qu'une valeur limite d'écart prédéfinie ne soit pas atteinte.

6. Procédé selon la revendication 5, **caractérisé en ce que** la valeur limite d'écart dépend d'au moins un paramètre du modèle.

7. Procédé selon l'une des revendications précédentes, **caractérisé en ce que** l'engrenage (7) comprend une courroie dentée (73) par l'intermédiaire de laquelle l'arbre moteur (6) est relié à l'arbre de direction (2), une pluralité d'autres valeurs limites d'écart définies étant enregistrées, chacune étant associée à un nombre concret de sauts de dents, l'unité de commande (3) vérifiant en outre, lorsque la première valeur de capteur détectée et la deuxième valeur de capteur détectée ne forment pas une paire de valeurs plausibles, si l'une des autres valeurs limites d'écart enregistrées a été atteinte.

8. Procédé selon la revendication 7, **caractérisé en ce que** l'unité de commande (3) reconnaît, lorsque l'une des autres valeurs limites d'écart enregistrées a été atteinte, un nombre de sauts de dents qui ont été effectués et qui sont associés à la valeur limite d'écart.

9. Procédé selon la revendication 7 ou la revendication 8, **caractérisé en ce que** l'unité de commande (3) vérifie si, pendant la durée d'une période définie, l'une des valeurs limites d'écart enregistrées est atteinte.

10. Procédé selon l'une des revendications 7 à 9, **caractérisé en ce que** la direction du saut de dent est déterminée.

11. Procédé selon l'une des revendications 7 à 10, **caractérisé en ce que** l'unité de commande (3) détermine, en utilisant au moins l'une des informations déterminées concernant un contrôle de saut de dent détecté, un facteur de correction concernant le saut de dent détecté et effectue une correction d'erreur en appliquant le facteur de correction déterminé à la première valeur de capteur détectée et/ou à la deuxième valeur de capteur détectée.

12. Procédé selon la revendication 11, **caractérisé en ce que** la détermination du facteur de correction comprend les étapes suivantes :
Définir une direction positive du saut de dent et une direction négative du saut de dent ;
Attribuer un signe positif au nombre de dents sautées si la direction du saut de dent est positive ;
Attribuer un signe négatif au nombre de dents sautées si la direction du saut de dent est négative ;
Multiplier par 360° le nombre de dents sautées avec le signe correspondant ;
Diviser le nombre de dents sautées, affecté du signe correspondant et multiplié par 360°, par le nombre de dents de l'engrenage côté entraînement du réducteur.

13. Procédé selon l'une des revendications précédentes, **caractérisé en ce que** l'unité de commande (3) détermine, sur la base du modèle, un angle absolu que fait l'arbre de direction (2).

14. Système de direction électromécanique (1) pour un véhicule automobile comprenant un arbre de direction (2), une unité de commande (3) et un actionneur à rétroaction (4) qui présente un moteur électrique (5) avec un arbre moteur (6) et qui est conçu pour appliquer un couple de rotation à l'arbre de direction (2) par l'intermédiaire d'un engrenage (7) avec un rapport de transmission prédéfini, un premier capteur angulaire (8) étant associé à l'arbre de direction (2) pour détecter un angle de rotation de l'arbre de direction (2) et un deuxième capteur angulaire (9) étant associé à l'arbre moteur (6) pour détecter un angle de rotation de l'arbre moteur (6), **caractérisé en ce que** l'unité de commande (3) est conçue pour faire fonctionner le système de direction (1) selon un procédé selon l'une des revendications précédentes.

15. Système de direction (1) selon la revendication 14, **caractérisé en ce qu'**au moins un des capteurs angulaires (8, 9) présente une alimentation en énergie redondante (18, 19).
